Europäisches Patentamt

European Patent Office

Office européen des brevets

(11) Publication number: **0 462 647 A1**

# (12) EUROPEAN PATENT APPLICATION

(21) Application number: **91201427.1**

(22) Date of filing: **11.06.91**

(51) Int. Cl.⁵: **H02K 9/06**, F04D 29/66

(30) Priority: **18.06.90 NL 9001377**

(43) Date of publication of application:
**27.12.91 Bulletin 91/52**

(84) Designated Contracting States:
**DE ES FR GB**

(71) Applicant: **N.V. Philips' Gloeilampenfabrieken
Groenewoudseweg 1
NL-5621 BA Eindhoven(NL)**

(72) Inventor: **Verbunt, Johannes Petrus Maria
c/o INT. OCTROOIBUREAU B.V., Prof.
Holstlaan 6
NL-5656 AA Eindhoven(NL)**

(74) Representative: **Bos, Kornelis Sjoerd et al
INTERNATIONAAL OCTROOIBUREAU B.V.
Prof. Holstlaan 6
NL-5656 AA Eindhoven(NL)**

(54) **Electric motor with two fans.**

(57) An electric motor having a rotor shaft (1) carrying at least two fans (6, 7) provided with blades is characterized in that the fans have mutually different numbers of blades such that the respective blade frequencies do not interfere.

FIG.1

EP 0 462 647 A1

The invention relates to an electric motor having a rotor shaft carrying at least two fans provided with blades.

It is known to provide an electric motor with a cooling fan arranged on the rotor shaft. Sometimes two fans are used, one on each end of the rotor shaft. It has been found that in particular at high motor speeds the fan is the most annoying noise source. The noise level is dictated mainly by the blade tip velocity. For this reason a fan is not made larger than strictly necessary and it is advantageous to choose for two small fans instead of one large fan.

The sound spectrum of a fan is broad-banded and also contains a "pure tone" at the blade frequency. The blade frequency is defined as the product of the number of revolutions and the number of blades. It is this "pure tone" which is experienced to be annoying.

It is the object of the invention to reduce the noise level of the above motor. To this end the electric motor in accordance with the invention is characterized in that the fans have mutually different numbers of blades such that the respective blade frequencies do not interfere.

The invention will now be described in more detail, by way of example, with reference to a drawing in which

Figure 1 shows diagrammatically an electric motor with two fans, and

Figure 2 shows a sound amplitude versus frequency curve of the electric motor shown in Fig. 1.

The electric motor comprises a rotor shaft 1 carrying a rotor 2 surrounded by a stator 3. The rotor shaft is supported in two bearing plates 4 at opposite sides of the rotor. The bearing plates are connected to the stator by means of pins 5, which results in a stable construction. For the cooling of the motor a fan 6, 7 is arranged at each side of the rotor. The blade number of the fan 6 differs from that of the fan 7, in such a way that no interference occurs.

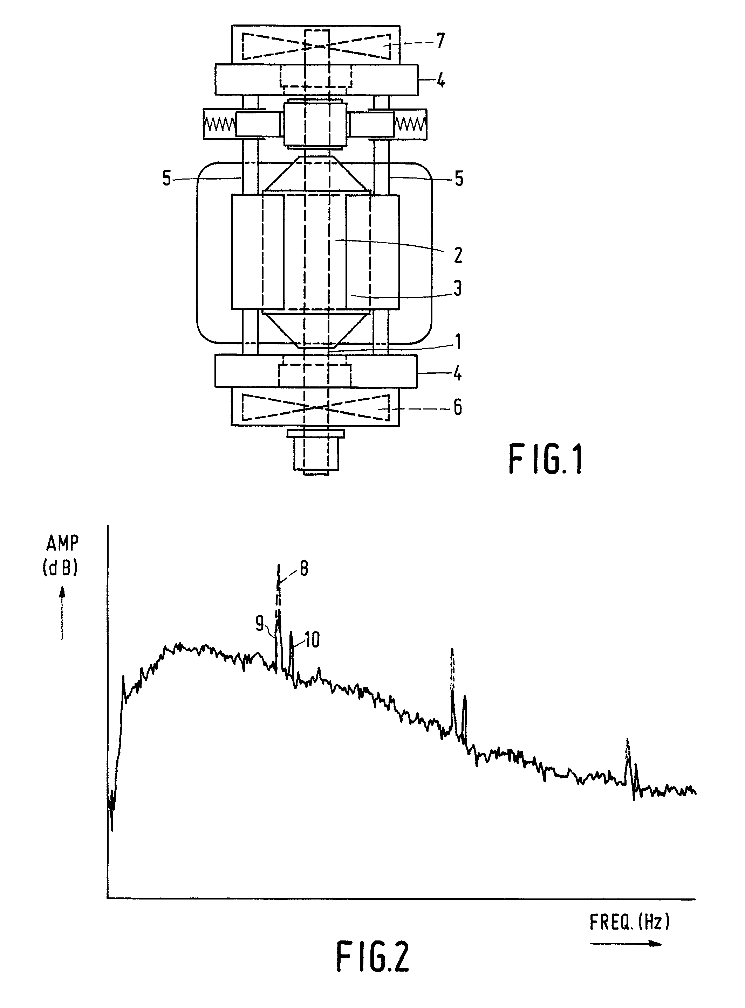

In Fig. 2 the sound power level (in dB(A)) is plotted versus the frequency (Hz). The peak 8 shown in broken lines applies to the situation in which both fans have the same number of blades. If in accordance with the invention one of the fans is given another number of blades, two much smaller peaks 9 and 10 will be produced by the fans 6 and 7 respectively. In effect, the original "pure tone" is split into two pure tones of a substantially lower level, which is less annoying.

blades, characterized in that the fans have mutually different numbers of blades such that the respective blade frequencies do not interfere.

## Claims

1. An electric motor having a rotor shaft (1) carrying at least two fans (6, 7) provided with

FIG.1

FIG.2

European
Patent Office

**EUROPEAN SEARCH
REPORT**

Application Number

**EP 91 20 1427**

## DOCUMENTS CONSIDERED TO BE RELEVANT

| Category | Citation of document with Indication, where appropriate, of relevant passages | Relevant to claim | CLASSIFICATION OF THE APPLICATION (Int. Cl.5) |
|---|---|---|---|
| X | GB-A-1 675 42  (STAMM ET AL)<br>* page 1, lines 12 - 31 * * page 2, line 83 - page 3, line 44; figures 1, 7, 11. * | 1. | H 02 K 9/06<br>F 04 D 29/66 |
| Y | US-A-2 508 144  (CARVILLE)<br>* column 2, line 31 - column 4, line 2; figures 1, 2. * | 1. | |
| Y | FR-A-1 199 651  (NORMACEM)<br>* page 1, right-hand column, line 37 - page 2, right-hand column, line 5; figures 1-5. * | 1. | |

TECHNICAL FIELDS
SEARCHED (Int. Cl.5)

H 02 K
F 04 D

The present search report has been drawn up for all claims

| Place of search | Date of completion of search | Examiner |
|---|---|---|
| The Hague | 04 September 91 | TIO K.H. |

CATEGORY OF CITED DOCUMENTS
X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
    document